# FASCICULE DE BREVET EUROPEEN

(11) **EP 2 268 122 B1**
(45) Date de publication et mention de la délivrance du brevet: **25.07.2012**
(21) Numéro de dépôt: 09735809.7
(22) Date de dépôt: 15.04.2009
(51) Int. Cl.: A01B 39/18, A01B 35/18

(54) **MACHINE AGRICOLE DESTINEE A LA DESTRUCTION DE LA COUVERTURE VEGETALE DU SOL PAR ELIMINATION MECANIQUE**
LANDWIRTSCHAFTSMASCHINE ZUR VERNICHTUNG VON BEWUCHS AUF DEM BODEN DURCH MECHANISCHE ENTFERNUNG
FARM MACHINE FOR DESTROYING PLANT COVER ON SOIL BY MECHANICAL REMOVAL

(30) Priorité: 16.04.2008 FR 0802107
(43) Date de publication de la demande: 05.01.2011
(73) Titulaire: Eco-Mulch, 45290 Nogent-sur-Vernisson (FR)
(72) Inventeur: BAZIN, Etienne, F-45290 Nogent-sur-Vernisson (FR); RENAUDAT, Jean-Charles, F-18370 Beddes (FR)
(74) Mandataire: L'Helgoualch, Jean
(86) Numéro de dépôt international: PCT/FR2009/000436
(87) Numéro de publication internationale: WO 2009/130421

(56) Documents cités:
- AU-A- 1 764 283
- DE-U1- 29 906 566
- FR-A- 2 722 363
- US-A- 5 333 694
- US-B1- 6 325 156

## Description

La présente invention concerne un dispositif agricole, et plus particulièrement une machine destinée à détruire toute couverture végétale sur le sol en éliminant divers végétaux tels que plantes, herbes ou broussailles, avant une nouvelle culture.

Dans le domaine de l'agriculture, une technique utilisée depuis de nombreuses années pour entretenir ou améliorer la fertilité des sols consiste à pratiquer la rotation culturale, consistant à alterner régulièrement diverses cultures sur une même parcelle en intercalant éventuellement des périodes de jachère. Cette technique présente l'avantage de rompre le cycle de certaines espèces nuisibles aux récoltes, d'améliorer la structure du sol par l'alternance de plantes à racines différentes, et parfois d'améliorer la composition organique du sol par l'apport de plantes variées. La technique de la rotation culturale a été parfois délaissée au profit de la monoculture intensive mais elle retrouve aujourd'hui un nouvel intérêt en raison l'influence grandissante de l'agriculture durable.

La pratique de cultures alternées, par exemple d'une culture intermédiaire entre deux cultures d'une même espèce, impose un nettoyage poussé du sol avant la nouvelle culture afin d'éliminer aussi soigneusement que possible tout résidu végétal, plante de la culture précédente, herbe ou adventice.

Une méthode connue consiste à utiliser des produits chimiques désherbants, tels que le glyphosate, mais cette utilisation présente l'inconvénient de laisser subsister dans le sol des résidus chimiques dont l'accumulation au fil du temps peut poser des problèmes environnementaux. C'est pourquoi elle est de plus en plus réglementée, et elle est incompatible avec une agriculture durable.

Divers dispositifs et machines agricoles connus permettent une élimination partielle des résidus de culture avant un nouvel ensemencement, et par exemple on utilise des charrues pour labourer le sol, dont la lame coupante, le soc, détruit les plantes en retournant le sol, ou des déchaumeuses qui effectuent un travail plus superficiel qui a pour effet de favoriser la décomposition des chaumes et des restes de paille. Les bineuses sont des machines agricoles comportant aussi un soc, mais adaptées à un travail effectué entre deux rangées de plantations afin d'ameublir et d'émietter la terre. Par exemple, le brevet FR 2.722.363 décrit un dispositif de tonte et d'ameublissement du sol adaptable à un tracteur agricole, comportant une lame de tonte et une fraise montées sur un cadre, et destiné au travail du sol dans des vignobles ou des vergers. Cependant, une élimination efficace des herbes et des plantes d'interculture demande une action uniforme sur toute la surface du sol, sans retourner la terre, et ces machines ne sont pas adaptées à une telle utilisation. Le brevet US 6.325.156 décrit une machine destinée à préparer le sol pour une culture en rang, et à détruire la couverture végétale, et ce dispositif comprend un disque rotatif à axe horizontal en avant d'un soc complété par deux lames, le soc et les lames étant sur un même support articulé qui peut être relevé quand le soc heurte un obstacle, indépendamment de la roue. Le brevet DE 299.06.566 décrit une machine agricole combinant un soc de charrue et une roue coupante sur un même support, mais il ne prévoit pas d'adapter la hauteur du support en fonction du terrain. Le brevet US 5.333.694 décrit une machine pour la préparation du sol avant une culture comportant un disque coupant disposé verticalement et indépendant d'un soc disposé à l'arrière.

La présente invention a pour objet une machine agricole destinée à la destruction de toute couverture végétale sur le sol entre deux cultures, en particulier dans un système de rotation culturale compatible avec une agriculture durable.

L'invention a encore pour objet une machine agricole attelée à un tracteur, destinée au nettoyage uniforme du sol entre deux cultures, par destruction de toute couverture végétale, assurant une excellente élimination mécanique des herbes et résidus de plantes d'interculture.

La machine agricole de l'invention, destinée au nettoyage du sol entre deux cultures, est mobile, du type attelé à un tracteur assurant son déplacement, et elle se distingue en ce qu'elle comprend au moins un disque à bord coupant tournant sur un axe sensiblement perpendiculaire au déplacement de la machine et faisant un angle de 0 à 45° par rapport au plan moyen du sol, et comportant des moyens pour limiter son enfoncement dans le sol, coopérant avec au moins une lame coupante sensiblement horizontale, placée en arrière du disque par rapport au sens de déplacement et s'étendant de part et d'autre du plan du disque.

De plus, le disque coupant et la lame sont montés solidairement sur un même support à hauteur variable au moyen d'un parallélogramme.

L'expression "sensiblement perpendiculaire" signifie que l'axe du disque peut former avec la perpendiculaire au déplacement un angle de 0 à 20°.

Conformément à l'invention, l'axe du disque coupant peut être fixe ou orientable.

Suivant une caractéristique préférentielle de l'invention, chaque lame coupante est disposée symétriquement par rapport au plan du disque, et est en forme de V dont la pointe est orientée vers le disque. La pointe du V de la lame peut éventuellement être arrondie.

Conformément à l'invention, il est avantageux que chaque disque comporte un moyeu portant un bandage de roulement limitant l'enfoncement du disque dans le sol, placé de telle sorte que la surface du bandage soit située à une distance du bord coupant du disque comprise entre 3 et 6 cm. Ainsi, l'enfoncement de la lame dans le sol est limitée à cette distance. Chaque disque est monté de manière à tourner librement sur son axe.

Suivant une autre caractéristique avantageuse de l'invention, le plan horizontal contenant le bord de la lame coupante coupe le disque à une hauteur située entre le bord coupant du disque et le bandage de roulement limitant son enfoncement dans le sol. Le disque coupant et la lame sont de préférence montés solidairement sur un même support à une hauteur variable au moyen d'un parallélogramme, comme indiqué ci-dessus, permettant d'ajuster en permanence la hauteur en fonction des inégalités du terrain sans modifier l'orientation horizontale de la lame, contrairement aux dispositifs connus de préparation de cultures comme par exemple celui du brevet US 6.325.156 précité.

Suivant une autre caractéristique de l'invention, l'articulation des bras du parallélogramme est amortie grâce à la forme carrée de l'axe du bras d'articulation qui est logé dans le tube à section carrée solidaire du montant, l'espace entre l'axe et le tube étant garni de caoutchouc. On peut aussi utiliser un montage traditionnel avec chape et axe ou des lames de ressort qui peuvent être simples ou doubles.

La lame est avantageusement montée pivotante suivant un axe vertical situé sensiblement au-dessus du milieu de la lame, de préférence au-dessus de la pointe de la lame en forme de V, de telle sorte qu'elle puisse s'effacer par pivotement lorsqu'elle rencontre un obstacle dans le sol. Il est préférable que la lame soit d'une largeur relativement importante pour couvrir uniformément une large bande de terrain. Par exemple on utilise avantageusement des lames dont la largeur peut être de l'ordre de 1 m à 1,5 m, c'est-à-dire bien supérieure à celle des lames d'engins agricoles usuels.

Suivant une variante de réalisation de l'invention, la machine comporte en outre un rotor portant des doigts ou des dents, par exemple des disques dentés, disposé suivant un axe horizontal perpendiculaire au déplacement de la machine, en arrière de chaque lame. Suivant une autre variante, l'axe du rotor peut être placé en biais et former un angle de 0 à 30° avec la perpendiculaire au déplacement. Il est préférable que les disques dentés soient fixés sur le rotor et inclinés par rapport à son axe, l'inclinaison étant alternée, d'un disque denté au suivant.

Ce rotor est entraîné en rotation par un système à engrenages, une chaîne ou une courroie, à une vitesse linéaire légèrement supérieure à celle des roues du tracteur et dans le même sens de rotation, ou en sens contraire, de manière à disperser et émietter efficacement les herbes coupées par les lames et les disques. Le mouvement d'entraînement peut être assuré par un moteur autonome, ou par le moteur ou les roues du tracteur par l'intermédiaire d'un engrenage adapté. Il est également possible d'utiliser un second rotor relié au premier avec un rapport d'entraînement différent de 1/1 pour créer un effet d'auto-entraînement, ou encore par la prise de force d'un tracteur.

La machine de l'invention comporte de préférence plusieurs disques coupants et un même nombre de lames. Les ensembles disque - lame peuvent être disposés sur une même rangée ou sur plusieurs rangées perpendiculaires au déplacement de la machine, par exemple sur un châssis rectangulaire ou triangulaire, de telle sorte que les lames puissent agir en continu sur toute la largeur de la machine sans laisser subsister aucune zone non travaillée par la machine. La largeur totale de la machine dépend du nombre de lames et disques, et elle peut être d'environ 3 à 4 mètres dans la plupart des cas, mais selon les cas elle peut être plus étroite, de l'ordre de 1 à 2 m, ou au contraire plus large et atteindre près de 20 m selon le châssis utilisé, en fonction du terrain.

Suivant une forme préférentielle de l'invention, les lames sont disposées de telle sorte que les zones traitées au cours du déplacement de la machine se recouvrent partiellement. La largeur de la zone de recouvrement peut être d'environ 10 à 30 cm. Ainsi par exemple, lorsque la machine comporte trois ensembles disque - lame disposés en triangle, symétriquement par rapport à l'axe longitudinal de la machine, l'ensemble central étant disposé en avant des deux autres, les extrémités de la lame centrale débordent devant l'extrémité intérieure de chacune des deux autres lames. Cette disposition assure une meilleure efficacité de la coupe, en particulier sur les terrains comportant des obstacles, tels que des cailloux, susceptibles de faire pivoter les lames sur leur axe.

Le déplacement de la machine peut être assuré par un tracteur agricole de type ordinaire, comportant un moteur pouvant délivrer une puissance de l'ordre de 25 cv/mètre travaillé, par exemple un moteur de puissance moyenne, de l'ordre de 100 cv.

Le mode de fonctionnement de la machine agricole de l'invention est indiqué ci-après.

La machine est attelée à un tracteur agricole de manière classique, de telle sorte qu'elle repose sur le sol et s'y enfonce de quelques centimètres sous le poids du cadre portant les disques, les lames et le châssis de la machine.

Dès la mise en mouvement du tracteur, les disques s'enfoncent dans le sol sous le poids de la machine, l'enfoncement étant limité à quelques centimètres grâce au bandage de roulement prévu sur les disques. Les disques, en progressant, ont pour effet d'ameublir le sol en avant des lames et de couper les herbes et tiges végétales qui sont couchées ou inclinées afin d'éviter tout bourrage devant l'étançon porte-lame.

Chacune des lames disposées derrière chaque disque pénètre dans la couche superficielle du sol et coupe horizontalement les racines des herbes et adventices présents. Cette faible pénétration des lames dans le sol limite la dépense énergétique liée à la résistance à l'avancement.

Les résidus végétaux et herbes coupées sont ensuite happés par les doigts ou dents, ou par les dents des disques, du rotor en arrière des lames, et dispersés sur le sol en éliminant les agrégats terreux qui peuvent adhérer aux racines.

Les caractéristiques et avantages de la présente invention apparaîtront plus en détail dans la description qui suit, relative à un mode préférentiel de réalisation, en référence aux dessins annexés, qui représentent :
Figure 1 : une vue en perspective d'une machine agricole selon l'invention.
Figure 2 : une vue de face de la machine représentée sur la Figure 1.
Figure 3 : une vue en coupe de côté d'un élément de la machine
Figure 4 : une vue en perspective de l'élément représenté sur la Figure 3.

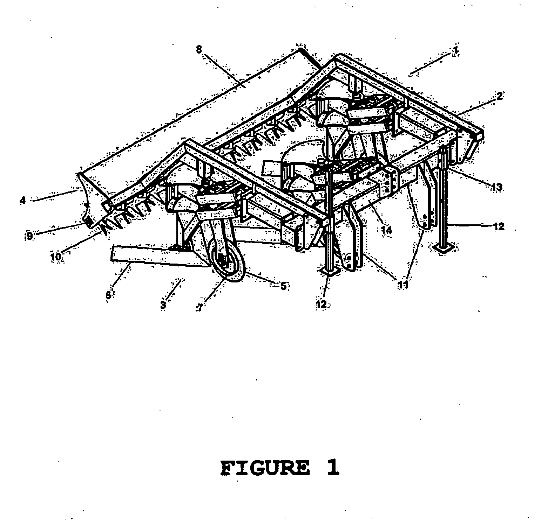

La machine (1) représentée sur la Figure 1 comporte un cadre (2) portant plusieurs éléments de coupe (3) et un rotor (4). L'élément de coupe est constitué essentiellement d'un disque (5) à axe de rotation horizontal, le plan du disque étant sensiblement vertical, et d'une lame (6) en V à bord avant inférieur coupant, disposée symétriquement par rapport au plan du disque, la pointe du V étant dirigée vers l'avant dans le sens de déplacement de la machine.

Le disque (5) comporte un bandage (7) circulaire de même axe qui permet de limiter la pénétration du disque (5) dans le sol, de telle sorte que le bandage prenne appui sur le sol lorsque la machine progresse. La pénétration du disque (5) dans le sol est assurée par le poids du cadre (2) et des éléments qu'il porte.

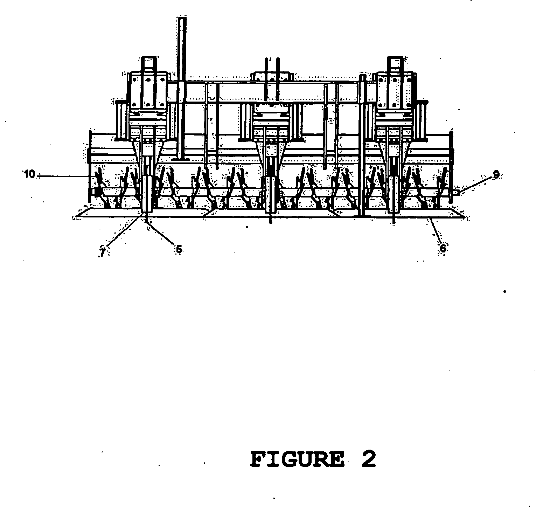

Le rotor (4), situé dans la partie arrière de la machine, est surmonté par un panneau (8) surmontant l'axe (9) sur lequel sont montés des disques à dents (10). Ces disques (10) sont fixés sur le rotor et inclinés par rapport à l'axe (9), l'inclinaison étant alternée d'un disque denté au suivant, comme représenté plus en détail sur la Figure 2, et ils ont pour fonction de happer les déchets végétaux et les herbes qui ont été coupés par le disque (5) et la lame (6), pour les secouer afin de les démêler et de faire tomber la terre qu'ils peuvent avoir entraînée. Comme le montre la Figure 2, le rotor (4) est positionné au-dessus du sol de telle sorte que les dents des disques (10) affleurent le sol. La hauteur minimale peut être ajustée au moyen d'une butée (non représentée). De même les bras support qui relient le châssis au(x) rotor(s) reposent sur un ou plusieurs parallélogrammes supports de lame de manière à ce que les positions relatives de la lame et du rotor soient constantes.

Le panneau (8) sert de déflecteur protecteur et limite les projections d'herbes, de déchets végétaux, voire de mottes de terre, qui peuvent être entraînés par le rotor (4).

La machine (1) est attelée à un tracteur (non représenté) par l'intermédiaire des attaches (11) coopérant avec des moyens adaptés fixés sur le tracteur. Des béquilles (12) sont prévues pour maintenir la machine (1) en position stable lorsqu'elle n'est pas attelée à un tracteur. Ces béquilles (12) peuvent coulisser dans des manchons (13) fixés sur la traverse (14) du cadre (2) et comportant des moyens pour les bloquer à une hauteur appropriée selon que la machine est arrêtée ou attelée au tracteur.

La machine de l'invention peut comporter trois ensembles disque - lame disposés suivant un triangule, comme le montrent les Figures 1 et 2.

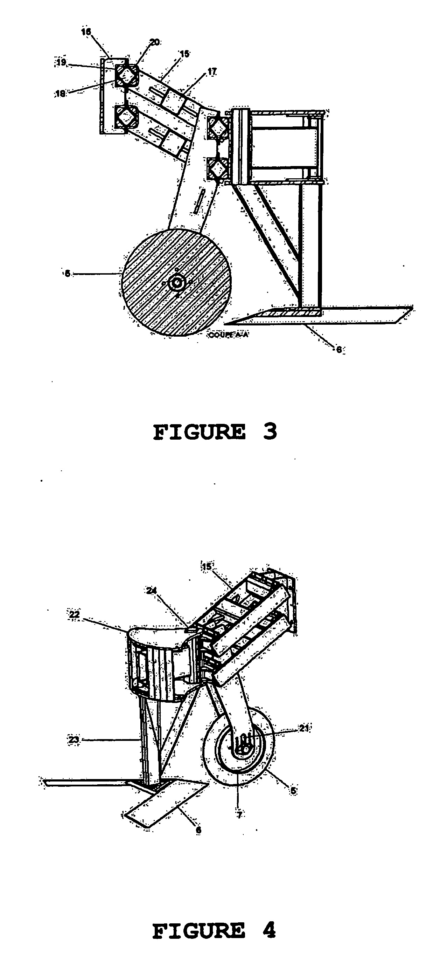

Comme le montre la Figure 3, le disque coupant (5) et la lame (6) sont montés solidairement sur un même support à hauteur variable au moyen d'un parallélogramme comportant deux bras orientables (15) et des montants verticaux fixes (16). Ce parallélogramme permet d'adapter la hauteur de la lame et du disque sans modifier leur orientation, c'est-à-dire que la lame (6) reste sensiblement horizontale et suit les inégalités du terrains quelle que soit la hauteur.

Les bras (15) sont reliés de manière classique au moyen des traverses (17) pour renforcer la structure de l'ensemble. L'articulation des bras (15) sur les montants (16) est amortie grâce à la forme carrée (18) de l'axe du bras (15) qui est logé dans le tube à section carrée (19) solidaire du montant, l'espace entre l'axe et le tube étant garni de caoutchouc (20)

Comme le montre la Figure 4, la hauteur relative du disque (5) par rapport à la lame (6) peut être ajustée en déplaçant la position de l'axe du disque dans la fente (21) prévue sur le bras fixé au montant inférieur du parallélogramme et portant le disque (5).

La lame (6) est fixée au caisson (22) par l'intermédiaire de l'étançon (23). Le caisson (22) peut pivoter par rapport au parallélogramme suivant l'axe (24) sensiblement vertical, situé approximativement au-dessus de la pointe de la lame coupante (6).

Ainsi l'ensemble constitué par la lame (6), l'étançon (23) et le caisson (22) peut pivoter librement sur l'axe (24), et si la lame rencontre un obstacle, tel qu'une pierre, sur l'une ou l'autre de ses ailes de part et d'autre de la pointe, au cours du déplacement de la machine, elle peut pivoter pour éviter l'obstacle et limiter le choc.

## Revendications

1. Machine agricole (1) mobile attelée à un tracteur, destinée à la destruction de toute couverture végétale sur le sol entre deux cultures, ou elle comprend au moins un disque (5) à bord coupant tournant sur un axe sensiblement perpendiculaire au déplacement de la machine et faisant un angle de 0 à 45° par rapport au plan moyen du sol, et comportant des moyens pour limiter son enfoncement dans le sol, coopérant avec au moins une lame coupante (6) sensiblement horizontale, placée en arrière du disque (5) par rapport au sens de déplacement et s'étendant de part et d'autre du plan du disque, **caractérisée en ce que** le disque coupant (5) et la lame (6) sont montés solidairement sur un même support à hauteur variable au moyen d'un parallélogramme (15).

2. Machine selon la revendication 1, **caractérisée en ce que** chaque lame coupante (6) est disposée symétriquement par rapport au plan du disque (5) et est en forme de V dont la pointe est orientée vers le disque (5).

3. Machine selon la revendication 1, **caractérisée en ce que** chaque disque (5) comporte un moyeu (7) portant un bandage de roulement limitant l'enfoncement du disque dans le sol.

4. Machine selon la revendication 3, **caractérisée en ce que** la surface du bandage est située à une distance du bord coupant du disque comprise entre 3 et 6 cm.

5. Machine selon la revendication 1, **caractérisée en ce que** chaque disque (5) est monté libre en rotation sur son axe.

6. Machine selon l'une quelconque des revendications précédentes, **caractérisée en ce que** le plan horizontal contenant le bord de la lame coupante (6) coupe le disque (5) entre le bord coupant et le bandage de roulement (7).

7. Machine selon la revendication 1, **caractérisée en ce que** la lame (6) est montée pivotante suivant un axe vertical (24) situé sensiblement au-dessus du milieu de la lame (6).

8. Machine selon l'une quelconque des revendications précédentes, **caractérisée en ce qu'**elle comporte en outre un rotor (4) portant des doigts, des dents ou des disques dentés (10), disposé suivant un axe horizontal (9) formant un angle de 0 à 30° avec la perpendiculaire au déplacement.

9. Machine selon la revendication 8, **caractérisée en ce que** les disques dentés (10) sont fixés sur le rotor (4) et inclinés par rapport à son axe, l'inclinaison étant alternée, d'un disque denté au suivant.

10. Machine selon l'une quelconque des revendications précédentes, **caractérisée en ce qu'**elle comprend plusieurs ensembles disque - lame disposés sur une même rangée ou sur plusieurs rangées perpendiculaires au déplacement de la machine.

## Claims

1. A mobile agricultural machine (1) attached to a tractor for destroying any vegetal cover on the ground between two crops, comprising at least one cutting edge disk (5) rotating about an axis substantially perpendicular to the movement of the machine and forming an angle from 0 to 45° with respect to the medium plane of the ground, and comprising means for limiting penetration thereof into the soil, cooperating with at least one substantially horizontal cutting blade (6) placed behind the disk (5) with respect to the moving direction, and extending on either side of the disk plane, **characterized in that** the cutting disk (5) and the blade (6) are mounted integrally on the same base variable in height by means of a parallelogram (15).

2. The machine according to claim 1, **characterized in that** each cutting blade (6) is arranged symmetrically with respect to the plane of the disk (5) and is shaped as a V the tip of which is oriented toward the disk (5).

3. The machine according to claim 1, **characterized in that** each disk (5) comprises a hub (7) carrying a running tread limiting penetration of the disk into the soil.

4. The machine according to claim 3, **characterized in that** the surface of the tread is located at a distance between 3 and 6 cm from the cutting edge of the disk.

5. The machine according to claim 1, **characterized in that** each disk (5) is mounted so as to rotate freely about the axis thereof.

6. The machine according to any of the preceding claims, **characterized in that** the horizontal plane containing the edge of the cutting blade (6) intersects the disk (5) between the cutting edge and the running tread (7).

7. The machine according to claim 1, **characterized in that** the blade (6) is pivotingly mounted along a vertical axis (24) located substantially above the center of the blade (6).

8. The machine according to any of the preceding claims, **characterized in** further comprising a rotor (4) carrying fingers, teeth, or toothed disks (10), arranged along a horizontal axis (9) forming an angle from 0 to 30° with the normal to the movement.

9. The machine according to claim 8, **characterized in that** the toothed disks (10) are fastened to the rotor (4) and inclined with respect to the axis thereof, the inclination alternating from one toothed disk to the next.

10. The machine according to any of the preceding claims, **characterized in** comprising several disk-blade assemblies in the same row or in several rows perpendicular to the movement of the machine.

## Patentansprüche

1. Fahrbare landwirtschaftliche Maschine (1), die an einen Traktor angekoppelt ist und dazu gedacht ist, jegliche Pflanzendecke auf dem Boden zwischen zwei Kulturen zu zerstören, umfassend mindestens eine Scheibe (5) mit einem Schneidrand, die sich um eine Achse dreht, die zur Bewegung der Maschine im Wesentlichen rechtwinklig ist und im Verhältnis zur mittleren Ebene des Bodens einen Winkel von 0 bis 45° bildet, und die Mittel zum Begrenzen ihres Einsinkens in den Boden umfasst, mit mindestens einem im Wesentlichen waagerechten Schneidmesser (6) zusammenwirkt, das im Verhältnis zur Bewegungsrichtung hinter der Scheibe (5) angeordnet ist und sich auf beiden Seiten der Scheibenebene erstreckt, **dadurch gekennzeichnet, dass** die Schneidscheibe (5) und das Messer (6) einstückig auf demselben Träger montiert sind, der durch ein Parallelogramm (15) höhenverstellbar ist.

2. Maschine nach Anspruch 1, **dadurch gekennzeichnet, dass** jedes Schneidmesser (6) im Verhältnis zu der Ebene der Scheibe (5) symmetrisch angeordnet ist und in Form eines V vorliegt, dessen Spitze in Richtung auf die Scheibe (5) orientiert ist.

3. Maschine nach Anspruch 1, **dadurch gekennzeichnet, dass** jede Scheibe (5) eine Nabe (7) umfasst, die eine Lauffläche trägt, die das Einsinken der Scheibe in den Boden einschränkt.

4. Maschine nach Anspruch 3, **dadurch gekennzeichnet, dass** sich die Oberfläche der Lauffläche in einem Abstand von zwischen 3 und 6 cm von der Schneidkante der Scheibe befindet.

5. Maschine nach Anspruch 1, **dadurch gekennzeichnet, dass** jede Scheibe (5) an ihrer Achse frei drehend montiert ist.

6. Maschine nach einem der vorhergehenden Ansprüche, **dadurch gekennzeichnet, dass** die waagerechte Ebene, welche die Kante des Schneidmessers (6) enthält, die Scheibe (5) zwischen der Schneidkante und der Lauffläche (7) kreuzt.

7. Maschine nach Anspruch 1, **dadurch gekennzeichnet, dass** das Messer (6) entlang einer senkrechten Achse (24), die sich im Wesentlichen über der Mitte des Messers (6) befindet, schwenkbar montiert ist.

8. Maschine nach einem der vorhergehenden Ansprüche, **dadurch gekennzeichnet, dass** sie ferner einen Rotor (4) umfasst, der Finger, Zähne oder gezahnte Scheiben (10) trägt und an einer waagerechten Achse (9) entlang angeordnet ist, die zu der Senkrechten zur Bewegung einen Winkel von 0 bis 30° bildet.

9. Maschine nach Anspruch 8, **dadurch gekennzeichnet, dass** die gezahnten Scheiben (10) an dem Rotor (4) befestigt sind und im Verhältnis zu seiner Achse geneigt sind, wobei die Neigung von einer gezahnten Scheibe zur anderen abwechselt.

10. Maschine nach einem der vorhergehenden Ansprüche, **dadurch gekennzeichnet, dass** sie mehrere Scheiben/Messer-Anordnungen auf einer Reihe oder auf mehreren Reihen umfasst, die zur Bewegung der Maschine rechtwinklig sind.
